# FASCICULE DE BREVET EUROPEEN

(11) **EP 2 843 193 B1**
(45) Date de publication et mention de la délivrance du brevet: **12.08.2020**
(21) Numéro de dépôt: 13181971.6
(22) Date de dépôt: 28.08.2013
(51) Int. Cl.: F01D 5/28, B29C 70/08, B22F 5/04

(54) **AUBE COMPOSITE FABRIQUÉE PAR ADDITION DE MATÉRIEL ET PROCÉDÉ DE FABRICATION CORRESPONDANT**
VERBUNDSTOFF-LAUFRADSCHAUFEL, DIE DURCH ADDITIVE FERTIGUNG ERZEUGT WIRD UND ENTSPRECHENDES HERSTELLUNGSVERFAHREN
COMPOSITE BLADE MADE BY ADDITIVE MANUFACTURING AND CORRESPONDING MANUFACTURING PROCESS

(43) Date de publication de la demande: 04.03.2015
(73) Titulaire: Safran Aero Boosters SA, 4041 Herstal (BE)
(72) Inventeur: Perez, Rafael, 4100 Boncelles (BE)
(74) Mandataire: Lecomte & Partners

(56) Documents cités:
- EP-A1- 2 319 641
- EP-A1- 2 620 240
- EP-A2- 1 681 440
- CN-A- 103 113 112
- CN-B- 101 649 844
- DE-A1-102009 048 665
- US-A1- 2012 201 686

## Description

### Domaine technique

L'invention a trait à une aube composite de turbomachine. Plus particulièrement, l'invention a trait à une aube composite avec un renfort et une matrice. L'invention a également trait à une turbomachine avec une aube selon l'invention. L'invention a également trait à un procédé de fabrication d'une aube composite avec un renfort et une matrice.

### Technique antérieure

Une turbomachine axiale comprend des rangées annulaires d'aubes rotoriques permettant d'accélérer un flux d'air, et des rangées annulaires d'aubes statoriques qui redressent le flux d'air accéléré. Les aubes doivent être légères pour réduire la masse de la turbomachine. En particulier, l'allégement des aubes rotoriques permet de réduire l'inertie du rotor.

L'allégement d'une aube doit néanmoins respecter des critères de résistance mécanique. Une aube doit résister à des vibrations et éventuellement à des ingestions dans la turbomachine. De plus, une aube rotorique doit résister aux efforts centrifuges. Le choix d'un matériau composite pour réaliser une aube est un compromis pour réduire sa masse tout en conservant une certaine résistance mécanique.

Il est connu du document FR 2 204 215 A5 une aube composite de rotor de turbosoufflante axiale. L'aube comprend une structure primaire formée d'un empilement de feuilles composites. Ces feuilles comportent des fibres longues de graphites qui sont noyées dans une résine polymérisée. En complément, l'aube comprend plusieurs couches de treillis métalliques insérées entre les feuilles composites et plaquées par-dessus la structure primaire. Les treillis métalliques sont remplis à l'avance de résine qui réticule avec la résine de l'empilement lors du moulage. Cependant, la résistance mécanique d'une telle aube est réduite. De plus, sa fabrication nécessite plusieurs opérations de préparation et de manipulation de feuilles qui augmentent le coût d'une telle aube.

Le document de brevet publié CN 103113112 A divulgue une aube de turbomachine, conforme au préambule de la revendication 1, et un procédé de fabrication d'une aube composite, conforme à la revendication 14.

### Résumé de l'invention

### Problème technique

L'invention a pour objectif de résoudre au moins un des problèmes techniques posés par l'art antérieur. Plus particulièrement, l'invention a pour objectif de renforcer une aube composite. L'invention a également pour objectif de proposer un procédé de réalisation d'une aube selon l'invention.

### Solution technique

L'invention a trait à une aube de turbomachine, l'aube comprenant un matériau composite avec une matrice et un renfort comprenant un treillis venu de matière et réalisé par fabrication additionnelle par couches, l'aube comportant un bord d'attaque, un bord de fuite, une surface intrados et une surface extrados qui s'étendent du bord d'attaque au bord de fuite, remarquable en ce que le treillis forme une structure tridimensionnelle s'étendant sur la majorité de l'épaisseur de l'aube entre la surface intrados et la surface extrados et/ou sur la majorité de la longueur de l'aube entre le bord d'attaque et le bord de fuite, et la structure tridimensionnelle du renfort comprend des tiges reliées entre elles, et la surface des tiges présente un aspect granuleux, avec des formes de grains en saillie et des formes de cavités.

Selon un mode avantageux de l'invention, le treillis comprend une enveloppe qui délimite un espace occupant la majorité de l'épaisseur de l'aube entre la surface intrados et la surface extrados et/ou sur la majorité de la longueur de l'aube entre le bord d'attaque et le bord de fuite, préférentiellement l'espace de l'enveloppe occupe la majorité du volume entre la surface intrados et la surface extrados.

Selon un mode avantageux de l'invention, les tiges sont reliées entre elles avec continuité de matière par des nœuds de liaison, éventuellement le nombre de tiges reliées aux nœuds de liaison varie.

Selon un mode avantageux de l'invention, les tiges définissent entre elles des polyèdres qui occupent la majorité du volume entre la surface intrados et la surface extrados, préférentiellement plus de 75% dudit volume, plus préférentiellement plus de 95% dudit volume.

Selon un mode avantageux de l'invention, la structure comprend au moins un, préférentiellement plusieurs jeux de tiges reliées entre elles qui forment chacun une jonction, la ou les jonctions s'étendant sur la majorité de l'épaisseur et l'aube et/ou la majorité de la longueur de l'aube et/ou la majorité de la hauteur de l'aube.

Selon un mode avantageux de l'invention, les tiges formant une jonction sont inclinées de moins 60° par rapport à la direction principale de ladite jonction, préférentiellement de moins de 45°, plus préférentiellement de moins de 30°.

Selon un mode avantageux de l'invention, la majorité des tiges reliées à une tige commune sont inclinées de plus de 10° par rapport à cette tige commune, préférentiellement de plus de 25°, plus préférentiellement de plus de 60°.

Selon un mode avantageux de l'invention, au moins une tige est généralement plate, et/ou au moins une tige est généralement sphérique.

Selon un mode avantageux de l'invention, les tiges présentent des longueurs variables et/ou des largeurs variables.

Selon un mode avantageux de l'invention, la densité volumique propre du treillis est comprise entre 1% et 80%, préférentiellement comprise entre 5% et 50%, plus préférentiellement comprise entre 10% et 20%.

Selon un mode avantageux de l'invention, la densité volumique du treillis entre la surface intrados et la surface extrados varie suivant la hauteur de l'aube et/ou du bord d'attaque au bord de fuite, préférentiellement l'aube comprend des moyens de fixation, la densité volumique du treillis augmentant en direction des moyens de fixation.

Selon un mode avantageux de l'invention, la rugosité Ra des tiges est supérieure à 2 µm, préférentiellement supérieure à 10 µm, plus préférentiellement supérieure à 50 µm.

Selon un mode avantageux de l'invention, la matrice et le renfort sont réalisés en des matériaux différents, la matrice comprenant une résine thermoplastique et le renfort comprenant du métal, préférentiellement du titane.

Selon un mode avantageux de l'invention, les tiges sont orientées selon au moins trois directions non coplanaires, préférentiellement selon au moins quatre directions non coplanaires.

Selon un mode avantageux de l'invention, le renfort comprend, en outre, une ou plusieurs parois formant le bord d'attaque, et/ou le bord de fuite, et/ou la surface intrados, et/ou la surface extrados de l'aube, ladite ou lesdites parois étant préférentiellement unitaires avec le treillis.

Selon un mode avantageux de l'invention, la structure tridimensionnelle s'étend en travers de l'épaisseur de l'aube sur la majorité de l'épaisseur de l'aube.

Selon un mode avantageux de l'invention, la structure tridimensionnelle s'étend perpendiculairement à la surface extrados sur la majorité de l'épaisseur de l'aube.

Selon un mode avantageux de l'invention, la structure tridimensionnelle forme un maillage tridimensionnel.

Selon un mode avantageux de l'invention, l'enveloppe peut être une enveloppe générale, qui délimite un espace occupant la majorité du volume entre la surface intrados et la surface extrados.

Selon un mode avantageux de l'invention, les tiges qui sont reliées entre elles sont chacune directement reliées entre elles.

Selon un mode avantageux de l'invention, le renfort comprend plus de cent, préférentiellement plus de mille tiges reliées les unes aux autres.

Selon un mode avantageux de l'invention, les tiges sont réparties dans le volume entre la surface intrados et la surface extrados.

Selon un mode avantageux de l'invention, au moins une tige est courbe.

Selon un mode avantageux de l'invention, au moins une tige présente une variation de section.

Selon un mode avantageux de l'invention, les tiges délimitent entre elles des polyèdres qui forment un maillage tridimensionnel.

Selon un mode avantageux de l'invention, au moins une tige est généralement cubique.

Selon un mode avantageux de l'invention, chaque jeu de tige comprend au moins trois tiges, préférentiellement au moins six tiges, plus préférentiellement au moins dix tiges.

Selon un mode avantageux de l'invention, la ou les jonctions s'étendent sur l'épaisseur de l'aube et/ou sur la longueur de l'aube et/ou sur la hauteur de l'aube.

L'épaisseur, la longueur, la hauteur de l'aube sont considérées respectivement en toute épaisseur, en toute longueur, en toute hauteur de l'aube. Ces dimensions peuvent correspondre aux valeurs minimales, aux valeurs moyennes ou aux valeurs maximales.

L'invention a également trait à un procédé de fabrication d'une aube composite comprenant les étapes suivantes : (a) réalisation d'un renfort comprenant un treillis par fabrication additionnelle par couches; (b) insertion du renfort dans un moule d'injection ; (c) injection et polymérisation d'une résine dans le moule d'injection de sorte à remplir le treillis; (d) démoulage de l'aube composite ; remarquable en ce que le treillis forme une structure tridimensionnelle s'étendant sur la majorité de l'épaisseur de l'aube entre la surface intrados et la surface extrados et/ou sur la majorité de la longueur de l'aube entre le bord d'attaque et le bord de fuite ; la structure tridimensionnelle du renfort comprend des tiges reliées entre elles ; et la surface des tiges présente un aspect granuleux, avec des formes de grains en saillie et des formes de cavités.

Selon un mode avantageux de l'invention, la rugosité Ra des tiges est supérieure à 2 µm, préférentiellement supérieure à 10 µm, plus préférentiellement supérieure à 50 µm.

Selon un mode avantageux de l'invention, l'épaisseur des couches est inférieure à 200 µm, préférentiellement inférieure à 50 µm, plus préférentiellement inférieure à 10 µm.

Selon un mode avantageux de l'invention, les poudres comprennent des grains de diamètre inférieur à 200 µm, préférentiellement inférieur à 2 µm , plus préférentiellement inférieur à 50 nm.

Selon un mode avantageux de l'invention, la cohésion s'effectue par réchauffement des poudres, préférentiellement à l'aide d'un laser ou d'un faisceau d'électrons.

Selon un mode avantageux de l'invention, le procédé comprend une répétition, préférentiellement plusieurs répétitions des étapes a) dépôt du matériau d'apport formant le renfort, et b) cohésion du matériau d'apport formant le renfort, entre deux réalisations de l'étape d) dépôt du matériau d'apport formant la matrice.

L'invention a également trait à une turbomachine comprenant au moins une aube, remarquable en ce que l'aube est conforme à l'invention et/ou l'aube est fabriquée selon un procédé de fabrication d'une aube composite conforme à l'invention.

### Avantages apportés

L'invention permet de renforcer une aube composite en la dotant d'un renfort tridimensionnel s'étendant à cœur. Un tel renfort apporte à l'aube une résistance mécanique homogène face aux contraintes. Le renfort forme une ossature hétérogène grâce aux tiges dont les formes sont adaptées localement en réponse aux contraintes subies par le matériau composite. En complément, les tiges et les parois sont solidaires, ce qui permet d'améliorer la robustesse de l'ensemble.

L'emploi d'un procédé de fabrication additionnelle permet de réaliser une aube en réduisant la manutention nécessaire à une telle aube. Cette technique facilite par exemple la réalisation de canaux courbe, qui s'étendent le long de la pale et qui sont formés dans le renfort. Par ailleurs, la fabrication additionnelle, par exemple à base de poudres crée des tiges avec une surface granuleuse qui favorise l'ancrage de la matrice sur chaque tige.

### Brève description des dessins

La figure 1 représente une turbomachine axiale selon l'invention.
La figure 2 est un schéma d'un compresseur de turbomachine selon l'invention.
La figure 3 illustre une aube selon l'invention.
La figure 4 schématise une coupe de l'aube selon l'invention suivant l'axe 4-4 tracé sur la figure 3.
La figure 5 esquisse un agencement de tiges du renfort de l'aube selon un premier mode de réalisation de l'invention.
La figure 6 illustre un agencement de tiges du renfort de l'aube selon un deuxième mode de réalisation de l'invention.
La figure 7 représente un diagramme des étapes d'un procédé de fabrication d'une aube selon l'invention.

### Description des modes de réalisation

Dans la description qui va suivre, les termes intérieur ou interne et extérieur ou externe renvoient à un positionnement par rapport à l'axe de rotation d'une turbomachine axiale.

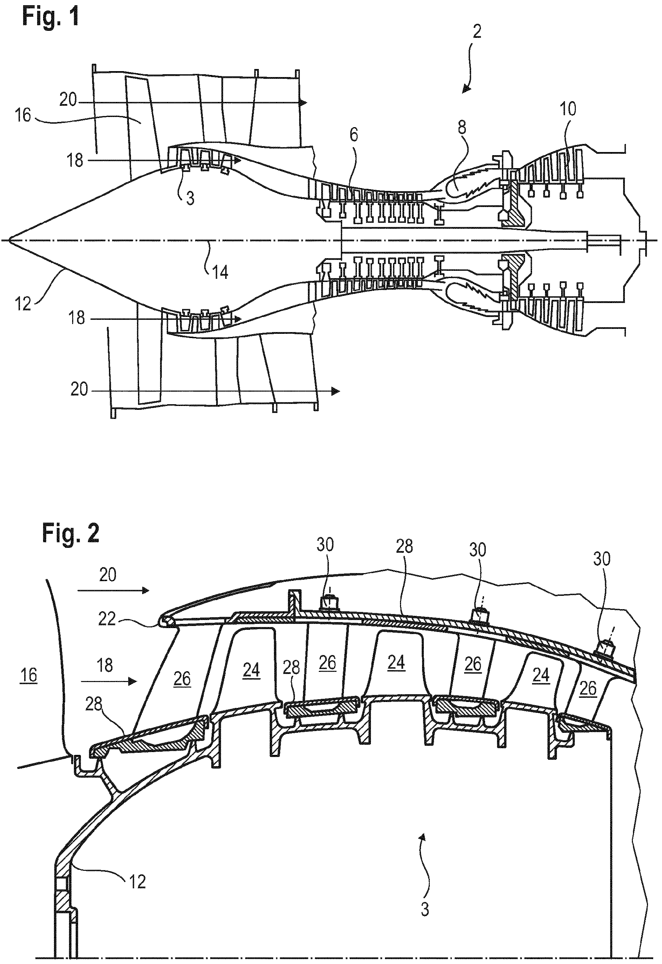

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 3, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 3 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 3 ou haute-pression. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 3 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur 28, et peuvent y être fixées à l'aide de moyens de fixation telle une tige fileté 30. Elles sont régulièrement espacées les unes des autres, et présentent une même orientation angulaire dans le flux. Avantageusemsent, les aubes d'une même rangée sont identiques. Eventuellement, l'espacement entre les aubes peut varier localement tout comme leur orientation angulaire. Certaines aubes peuvent être différentes du reste des aubes de leur rangée.

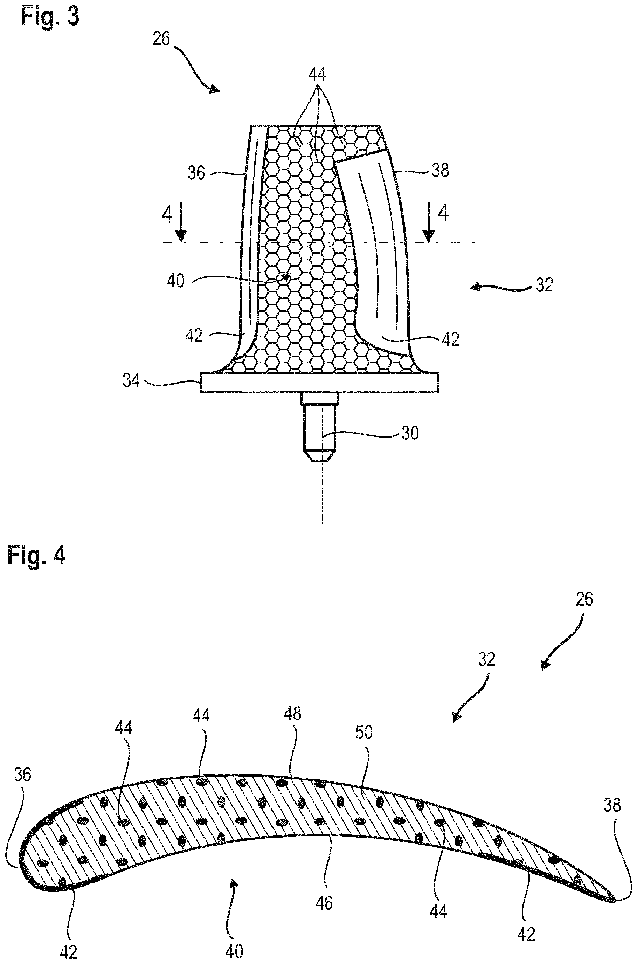

La figure 3 est une illustration d'une aube statorique 26 de redresseur selon l'invention. L'aube peut être une aube de compresseur ou une aube de turbine.

L'aube 26 comprend une pale 32, ou corps, destinée à s'étendre dans le flux annulaire. Elle peut comprendre une plateforme extérieure 34 destinée à être fixée au carter extérieur du compresseur. Eventuellement l'aube 26 comporte une deuxième plateforme, disposée à l'intérieur. Des moyens de fixation 30 peuvent s'étendre depuis la plateforme 34 à l'opposé de la pale 32. La pale de l'aube peut être directement fixée au carter de la turbomachine, par exemple par soudage. Dans cette éventualité, l'aube peut être libre de plateforme externe. L'extrémité intérieure de l'aube peut comprendre une ouverture pour servir d'ancrage à une virole annulaire interne.

Suivant une alternative de l'invention, l'aube peut être une aube rotorique. En guise de moyen de fixation, une telle aube peut comprendre une queue d'arronde destinée à être insérée dans une gorge correspondante du rotor. L'aube peut être une aube de fan.

L'aube 26 présente un bord d'attaque 36 disposé en amont, et un bord de fuite 38 disposé en aval. Elle présente en outre une surface intrados disposée du côté refoulement de l'aube, et une surface extrados disposée du côté aspiration de l'aube. La surface intrados et la surface extrados s'étendent depuis le bord d'attaque 36 jusqu'au bord de fuite 38. Elles sont respectivement incurvée et bombée, et définissent la forme de la pale 32.

L'aube 26 comprend un matériau composite avec une matrice (non représentée) et un renfort 40. Le renfort 40 peut comprendre un treillis qui forme une structure tridimensionnelle. La structure tridimensionnelle peut s'étendre dans la majorité du volume de la pale 32 de l'aube, éventuellement dans la totalité dudit volume. La structure tridimensionnelle peut s'étendre sur la majorité de l'épaisseur de l'aube entre la surface intrados et la surface extrados. La structure tridimensionnelle peut s'étendre sur la majorité de la longueur de l'aube 26 entre le bord d'attaque 36 et le bord de fuite 38. L'épaisseur de l'aube peut être considérée perpendiculairement à sa corde, la longueur de l'aube peut être considérée le long de la corde.

Le treillis peut comprendre une enveloppe, éventuellement une enveloppe extérieure. L'enveloppe peut épouser toutes les surfaces extérieures du treillis. L'enveloppe peut épouser les limites du treillis et en délimiter les contours. L'enveloppe délimite un espace, ou espace interne, qui s'étend ou occupe au moins 10%, préférentiellement la majorité de l'épaisseur de l'aube 26 entre la surface intrados et la surface extrados ; et/ou qui s'étend ou occupe au moins 10%, préférentiellement la majorité de la longueur de l'aube entre le bord d'attaque et le bord de fuite. Eventuellement, l'espace de l'enveloppe occupe la majorité du volume entre la surface intrados et la surface extrados.

La structure tridimensionnelle peut comprendre un maillage tridimensionnel, qui est éventuellement défini par des polyèdres remplissant le volume entre la surface intrados et la surface extrados. Les polyèdres peuvent être définis par des nœuds de liaison. Le renfort peut présenter des alvéoles communicantes qui forment un réseau de canaux qui s'étendent sur la majorité de l'aube, préférentiellement qui s'étendent généralement sur l'ensemble du volume de la pale. Avantageusement, l'espace creux du renfort est comblé par la matrice. Avantageusement, la ou les plateformes et/ou les moyens de fixation sont solidaires du renfort. Préférentiellement, ils sont venus de matière.

De manière optionnelle, le renfort 40 de l'aube 26 comprend une paroi 42 formant le bord d'attaque de l'aube. La paroi 42 peut être une tôle s'étendant du côté intrados et du côté extrados. Le renfort 40 de l'aube peut comprendre une paroi 42 formant au moins une portion de la surface extrados ou au moins une portion de la surface intrados de sorte à protéger l'aube 26 contre l'abrasion.

La structure tridimensionnelle comprend des tiges 44. Les tiges 44 sont reliées ou fixées les unes aux autres, par exemple avec continuité de matière via les nœuds de liaison. Préférentiellement, chacune des tiges est directement reliée à d'autres tiges, éventuellement à plus de trois autres tiges. Ces tiges 44 peuvent être réparties ou éparpillées dans le volume entre la surface intrados et la surface extrados. Ces tiges 44 peuvent être réparties ou éparpillées dans la majorité dudit volume, préférentiellement dans l'ensemble dudit volume. Les tiges 44 peuvent être reliées les unes aux autres par leurs extrémités. Elles sont disposées bout à bout, et sont préférentiellement inclinées par rapport aux tiges auxquelles elles sont reliées. Eventuellement, à une même extrémité, une tige peut être reliée à une tige colinéaire, le nombre de tiges colinéaire étant préférentiellement minoritaire par rapport au nombre des autres tiges reliées à l'extrémité considérée.

Le renfort 40 est venu de matière. Les tiges 44 liées entre elles sont venues de matière, préférentiellement les parois 42 et les tiges 44 sont venues de matière. Ainsi, les tiges 44 sont solidaires des parois 42 et forment un ensemble mécanique monobloc.

La structure tridimensionnelle comprend au moins un jeu de tiges 44 reliées entre elles qui forment une jonction, préférentiellement plusieurs jeux de tiges reliées entre elles, chaque jeu formant une jonction 44. Une jonction peut s'étendre sur plus de 10%, préférentiellement sur plus de 80% de l'épaisseur de l'aube ; et/ou sur plus de 10%, préférentiellement sur plus de 80% de la longueur de l'aube ; et/ou sur plus de 10%, préférentiellement sur plus de 80% de la hauteur de l'aube. Les jonctions peuvent s'étendre de la surface intrados à la surface extrados, éventuellement en étant généralement inclinées par rapport aux normales à ces surfaces.

Chaque jeu comprend au moins trois tiges, préférentiellement plus de vingt tiges. Chaque jonction présente une direction principale, qui peut être définie par rapport aux extrémités de la jonction considérée. Les tiges d'une même jonction sont inclinées par rapport à sa direction principale, préférentiellement de plus de 5°.

La figure 4 ébauche une coupe de l'aube selon l'axe 4-4 tracé sur la figure 3.

L'épaisseur moyenne du renfort 40 peut représenter plus de 10%, préférentiellement plus de la moitié de l'écartement moyen entre la surface intrados 46 et la surface extrados 48 de l'aube. Eventuellement, l'épaisseur moyenne de l'espace occupé par les tiges 44 liées les unes aux autres représente plus de 10%, préférentiellement plus de la moitié de l'écartement moyen entre la surface intrados 46 et la surface extrados 48.

Les tiges 44 sont noyées dans la matrice 50. La matrice 50 occupe la majorité du volume de la pale 32, préférentiellement plus de 75%. La matrice 50 peut former la majorité de la surface intrados 46 et/ou de la surface extrados 48. Des tiges 44 peuvent affleurer et former des portions de la surface intrados 46 et/ou de la surface extrados 48. La matrice 50 peut former le bord d'attaque 36 et/ou le bord de fuite 38.

Les tiges 44 sont généralement liées à d'autres tiges 44. La majorité des tiges 44 sont liées à plusieurs autres tiges 44, préférentiellement au moins six, plus préférentiellement au moins huit autres tiges 44. Les tiges 44 reliées les unes aux autres forment des liaisons mécaniques continues qui s'étendent du bord d'attaque 36 au bord de fuite 38, et/ou de la surface intrados 46 à la surface extrados 48, et/ou de l'extrémité interne de la pale à l'extrémité externe de la pale. Ces liaisons mécaniques présentent une continuité de matière. Les tiges liées entre elles peuvent forment la structure tridimensionnelle. Elles peuvent former un treillis tridimensionnel. Par treillis tridimensionnel on entend par exemple un ensemble comprenant plusieurs treillis parallèles qui sont reliés entre eux à l'aide de tiges transversales.

Le renfort 40 et la matrice 50 sont réalisés en des matériaux différents. Le renfort 40 peut être métallique, préférentiellement en titane, éventuellement en acier ou en aluminium. La matrice 50 peut être un polymère, par exemple une résine thermoplastique telle du polyétherimide (PEI). Ou encore, le renfort 40 peut comprendre un matériau céramique, préférentiellement être essentiellement réalisé en céramique et comprendre une résine polymère. Suivant une autre alternative de l'invention, le renfort peut être métallique et comprendre une matrice céramique.

Le matériau du renfort peut présenter un module d'élasticité supérieur au module d'élasticité du matériau de la matrice. Eventuellement, la résistance à la rupture du matériau du renfort est supérieure à la résistance à la rupture du matériau de la matrice.

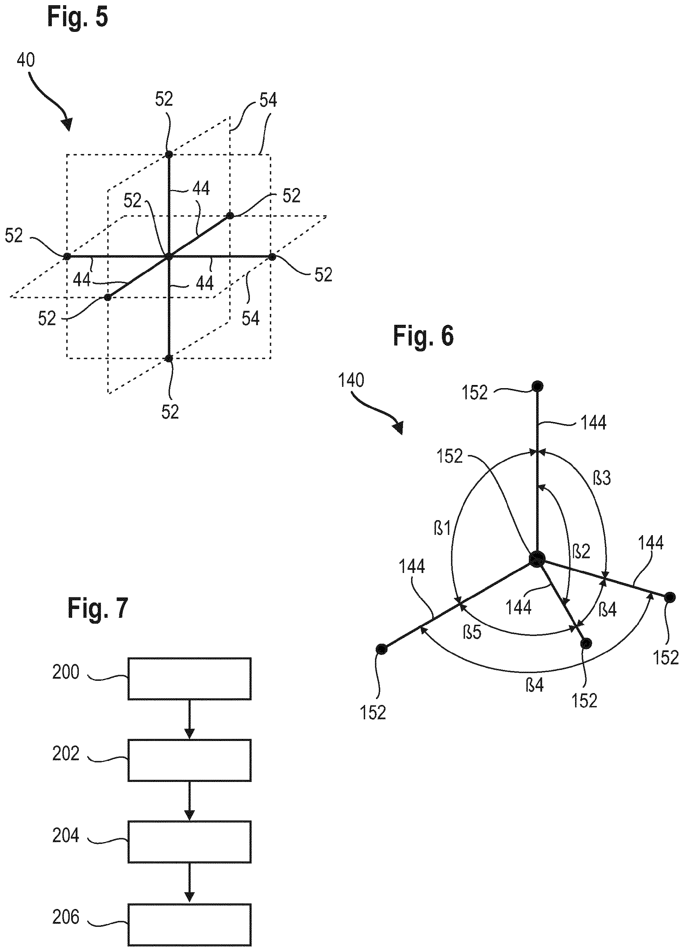

La figure 5 ébauche un agencement des tiges 44 d'une portion du renfort 40 de l'aube selon un premier mode de réalisation de l'invention. L'orientation des tiges peut varier localement.

Les tiges 44 sont agencées selon trois directions non coplanaires. Les trois directions peuvent être inclinées les unes par rapport aux autres selon des angles différents. Les trois directions peuvent être à angle droit. Les tiges 44 délimitent alors des hexaèdres tels des cubes dont les arrêtes peuvent être inclinées par rapport à la hauteur de l'aube.

Les tiges 44 reliées entre elles forment des nœuds de liaison 52. Les nœuds de liaison sont généralement répartis selon trois jeux de plans 54. Chaque jeu de plans 54 comprend des plans parallèles, les jeux de plans 54 étant inclinés les uns par rapport aux autres. Un même noeud de liaison 52 peut être relié à six autres nœuds de liaison 52. Les nœuds de liaison peuvent être disposés sur des jeux de surfaces incurvées, par exemple des surfaces épousant généralement la surface intrados ou la surface extrados de l'aube.

Les tiges 44 présentent généralement une même longueur et une même section. Les tiges 44 peuvent être droites et rondes. Cependant, la longueur des tiges 44 peut varier, tout comme leurs sections. Une tige peut présenter une section différente des autres tiges. Une même tige peut voir sa section évoluer, par exemple en diamètre ou en nature. Une tige peut présenter une section ronde à une extrémité et une section carrée à l'autre extrémité. Au moins une tige peut être courbe ou coudée. Au moins une tige peut être plate, sphérique ou cubique.

Les tiges 44 peuvent présenter une longueur inférieure à 40 mm, préférentiellement inférieure à 10 mm, plus préférentiellement inférieure à 2 mm. Les tiges 44 peuvent présenter une largeur inférieure à 5 mm, préférentiellement inférieure à 0,50 mm, plus préférentiellement inférieure à 0,10 mm.

La figure 6 représente un agencement des tiges 144 d'une portion du renfort 140 de l'aube selon un deuxième mode de réalisation de l'invention. Cette figure 6 reprend la numérotation des figures précédentes pour les éléments identiques ou similaires, la numération étant toutefois incrémentée de 100.

Les tiges 144 sont agencées selon quatre directions non coplanaires, préférentiellement selon au moins quatre directions non coplanaires. Un noeud de liaison 152 de tiges 144 est relié à quatre autres nœuds de liaison 152 de tiges 144 qui forment un tétraèdre dont le centre peut être occupé par le noeud de liaison commun. L'orientation et la longueur des tiges peuvent varier au sein du renfort. Les quatre directions définissent entre elles des angles différents (β1, β2, β3, β4, β5, β6). Ces angles peuvent être égaux.

Suivant une alternative de l'invention, les tiges du renfort peuvent être agencées selon six directions, certaines directions pouvant être coplanaires. Les tiges peuvent former des pyramides à base triangulaire. Dans cette configuration, un même noeud de liaison peut être directement relié à douze autres nœuds de liaison.

Suivant une autre alternative de l'invention, les tiges du renfort sont agencées en combinant les agencements de tiges présentés ci-dessus.

La figure 7 représente un schéma d'un procédé de fabrication d'une aube selon l'invention.

Le procédé de fabrication d'une aube composite, le procédé comprend les étapes suivantes, qui se succèdent dans l'ordre suivant :
(a) réalisation d'un renfort comprenant un treillis par fabrication additionnelle par couches (200) ;
(b) insertion du renfort dans un moule d'injection (202) ;
(c) injection et polymérisation d'une résine dans le moule d'injection (204) ;
(d) démoulage de l'aube composite (206) ;

Le renfort de l'aube est réalisé par fabrication additionnelle par couches. Les couches peuvent être plates et/ou d'épaisseurs constantes. Le renfort est réalisé par couches de matériaux d'apport. Les matériaux d'apport peuvent être appliqués sous forme fondue, ou sous forme de poudres qui sont solidifiées par après. La cohésion des poudres est assurée par chauffage des poudres, par exemple à l'aide d'un laser ou d'un faisceau d'électrons.

Les poudres présentent des tailles de grains inférieures à 0,50 mm. Eventuellement les poudres sont des nano-poudres, dont les grains présentent des grains de diamètre moyen inférieur ou égal à 50 nanomètres. Les couches formant le renfort peuvent présenter une épaisseur inférieure à 0,50 mm, préférentiellement inférieure à 100 µm.

Les couches de renfort peuvent être d'épaisseurs variables. Par exemple, des couches d'épaisseurs inférieures à 200 µm, préférentiellement inférieures à 50 µm, plus préférentiellement inférieures à 20 µm permettent un refroidissement rapide grâce à la capacité thermique des couches précédentes de matériau solidifié.

Les couches forment un empilement éventuellement orienté selon la hauteur de l'aube, la hauteur de l'aube pouvant correspondre à une direction radiale de la turbomachine. Les tiges peuvent être inclinées par rapport à la direction de l'empilement. Préférentiellement, la majorité des tiges sont inclinées par rapport à l'empilement, préférentiellement de plus 5°, plus préférentiellement de plus de 20°. Les tiges peuvent être en majorité inclinées par rapport aux couches, préférentiellement de plus de 5°, plus préférentiellement de plus de 20°.

La surface des tiges présente un aspect granuleux, avec des formes de grains en saillie et des formes de cavités. Cet aspect granuleux peut résulter de grains de matériau, éventuellement de poudre, dont la cohésion conserve la forme générale. La surface des tiges peut présenter une rugosité Ra supérieure à 5 µm, préférentiellement supérieure à 50 µm. La rugosité Ra correspond à la moyenne intégrale des écarts en valeur absolue des variations de hauteur d'un profil donné. Le procédé permet de créer un renfort métallique avec des tiges dont les grains présentent une taille homogène.

Cet état de surface améliore l'ancrage entre les tiges et la matrice. Nous soulignons au passage que le procédé de fabrication additionnelle par couche favorise le remplissage de la surface granuleuse des tiges par la matrice, et en particulier le remplissage d'éventuelles cavités par la matrice.

L'aube peut être réalisée de manière mixte. Sa plateforme et ses moyens de fixations peuvent être réalisés par moulage, par usinage, par forgeage. La plateforme peut ensuite être utilisée comme base sur laquelle est réalisé le renfort par fabrication additionnelle par couches.

Il est évident pour l'homme de l'art que les différents modes de réalisation de l'invention et les différentes variantes peuvent être combinés.

## Revendications

1. Aube (26) de turbomachine (2), l'aube (26) comprenant un matériau composite avec une matrice (50) et un renfort (40) comprenant un treillis est venu de matière et réalisé par fabrication additionnelle par couches, l'aube (26) comportant un bord d'attaque (36), un bord de fuite (38), une surface intrados (46) et une surface extrados (48) qui s'étendent du bord d'attaque au bord de fuite,
**caractérisé en ce que**
le treillis forme une structure tridimensionnelle s'étendant sur la majorité de l'épaisseur de l'aube entre la surface intrados (46) et la surface extrados (48) et/ou sur la majorité de la longueur de l'aube entre le bord d'attaque (36) et le bord de fuite (38) ;
la structure tridimensionnelle du renfort comprend des tiges (44 ; 144) reliées entre elles, et
la surface des tiges présente un aspect granuleux, avec des formes de grains en saillie et des formes de cavités.

2. Aube selon la revendication 1, **caractérisée en ce que** le treillis comprend une enveloppe qui délimite un espace occupant la majorité de l'épaisseur de l'aube (26) entre la surface intrados (46) et la surface extrados (48) et/ou la majorité de la longueur de l'aube entre le bord d'attaque et le bord de fuite, préférentiellement l'espace de l'enveloppe occupe la majorité du volume entre la surface intrados (46) et la surface extrados (48).

3. Aube (26) selon l'une des revendications 1 à 2, **caractérisée en ce que** les tiges (44 ; 144) sont reliées entre elles avec continuité de matière par des nœuds de liaison (52 ; 152), éventuellement le nombre de tiges reliées aux nœuds de liaison varie.

4. Aube (26) selon la revendication 3, **caractérisée en ce que** les tiges (44 ; 144) définissent entre elles des polyèdres qui occupent la majorité du volume entre la surface intrados (46) et la surface extrados (48), préférentiellement plus de 75% dudit volume, plus préférentiellement plus de 95% dudit volume.

5. Aube (26) selon l'une des revendications 1 à 4, **caractérisée en ce que** la structure comprend au moins un, préférentiellement plusieurs jeux de tiges (44 ; 144) reliées entre elles qui forment chacun une jonction, la ou les jonctions s'étendant sur la majorité de l'épaisseur de l'aube (26) et/ou la majorité de la longueur de l'aube (26) et/ou la majorité de la hauteur de l'aube (26).

6. Aube (26) selon la revendication 5, **caractérisée en ce que** les tiges (44 ; 144) formant une jonction sont inclinées de moins de 60° par rapport à la direction principale de ladite jonction, préférentiellement de moins de 45°, plus préférentiellement de moins de 30°.

7. Aube (26) selon l'une des revendications 1 à 6, **caractérisée en ce que** la majorité des tiges (44) reliées à une tige commune sont inclinées de plus de 10° par rapport à cette tige commune, préférentiellement de plus de 25°, plus préférentiellement de plus de 60°.

8. Aube (26) selon l'une des revendications 3 à 7, **caractérisée en ce qu'**au moins une tige est généralement plate, et/ou au moins une tige est généralement sphérique.

9. Aube (26) selon l'une des revendications 3 à 8, **caractérisée en ce que** les tiges (44 ; 144) présentent des longueurs variables et/ou des largeurs variables.

10. Aube (26) selon l'une des revendications 1 à 9, **caractérisée en ce que** la densité volumique propre du treillis est comprise entre 1% et 80%, préférentiellement comprise entre 5% et 50%, plus préférentiellement comprise entre 10% et 20%.

11. Aube (26) selon l'une des revendications 1 à 10, **caractérisée en ce que** la densité volumique du treillis entre la surface intrados (46) et la surface extrados (48) varie suivant la hauteur de l'aube (26) et/ou du bord d'attaque (36) au bord de fuite (38), préférentiellement l'aube comprend des moyens de fixation (30), la densité volumique du treillis augmentant en direction des moyens de fixation (30).

12. Aube (26) selon l'une des revendications 1 à 11, **caractérisée en ce que** la rugosité Ra des tiges (44 ; 144) est supérieure à 2 µm, préférentiellement supérieure à 10 µm, plus préférentiellement supérieure à 50 µm.

13. Aube (26) selon l'une des revendications 1 à 12, **caractérisée en ce que** la matrice (50) et le renfort (40) sont réalisés en des matériaux différents, la matrice (50) comprenant une résine thermoplastique et le renfort (40) comprenant du métal, préférentiellement du titane.

14. Procédé de fabrication d'une aube composite, comprenant les étapes suivantes :
(a) réalisation d'un renfort comprenant un treillis (200) par fabrication additionnelle par couches;
(b) insertion du renfort dans un moule d'injection (202) ;
(c) injection et polymérisation d'une résine dans le moule d'injection de sorte à remplir le treillis (204) ;
(d) démoulage de l'aube composite (206) ;
**caractérisé en ce que**
le treillis forme une structure tridimensionnelle s'étendant sur la majorité de l'épaisseur de l'aube entre la surface intrados (46) et la surface extrados (48) et/ou sur la majorité de la longueur de l'aube entre le bord d'attaque (36) et le bord de fuite (38) ;
la structure tridimensionnelle du renfort comprend des tiges (44 ; 144) reliées entre elles ; et
la surface des tiges présente un aspect granuleux, avec des formes de grains en saillie et des formes de cavités.

15. Procédé selon la revendication 14, **caractérisé en ce que** l'aube est conforme à la revendication 1 et la rugosité Ra des tiges (44 ; 144) est supérieure à 2 µm , préférentiellement supérieure à 10 µm, plus préférentiellement supérieure à 50 µm.

## Patentansprüche

1. Schaufel (26) für eine Turbomaschine (2), wobei die Schaufel (26) ein Verbundmaterial mit einer Matrix (50) und einer Verstärkung (40) umfasst, die ein einheitliches, durch additive Schichtherstellung hergestelltes Netz umfasst, wobei die Schaufel (26) eine Vorderkante (36), eine Hinterkante (38), eine druckseitige Oberfläche (46) und eine saugseitige Oberfläche (48) aufweist, wobei sich beide Oberflächen von der Vorderkante zur Hinterkante erstrecken,
**dadurch gekennzeichnet, dass**
das Netz eine dreidimensionale Struktur bildet, die sich über den Großteil der Dicke der Schaufel zwischen der druckseitigen Oberfläche (46) und der saugseitigen Oberfläche (48) und/oder den Großteil der Länge der Schaufel zwischen der Vorderkante (36) und der Hinterkante (38) erstreckt;
wobei die dreidimensionale Struktur der Verstärkung aus miteinander verbundenen Stäben (44; 144) besteht, und
die Oberfläche der Stäbe einen körnigen Charakter mit hervorstehenden Kornformen und Hohlräumen aufweist.

2. Schaufel nach Anspruch 1, **dadurch gekennzeichnet, dass** das Netz eine Umhüllung umfasst, die einen Raum definiert, der den Großteil der Dicke der Schaufel (26) zwischen der druckseitigen Oberfläche (46) und der saugseitigen Oberfläche (48) und/oder den Großteil der Länge der Schaufel zwischen der Vorderkante und der Hinterkante einnimmt, wobei vorzugsweise der Raum der Umhüllung den Großteil des Volumens zwischen der druckseitigen Oberfläche (46) und der saugseitigen Oberfläche (48) einnimmt.

3. Schaufel (26) nach einem der Ansprüche 1 bis 2, **dadurch gekennzeichnet, dass** die Stäbe (44; 144) durch Verbindungsknoten (52; 152) materialkontinuierlich miteinander verbunden sind, und wobei vorzugsweise die Anzahl der mit den Verbindungsknoten verbundenen Stäbe variiert.

4. Schaufel (26) nach Anspruch 3, **dadurch gekennzeichnet, dass** die Stäbe (44; 144) miteinander Polyeder definieren, die den größten Teil des Volumens zwischen der druckseitigen Oberfläche (46) und der saugseitigen Oberfläche (48) einnehmen, vorzugsweise 75 % des genannten Volumens, noch bevorzugter mehr als 95 % des genannten Volumens.

5. Schaufel (26) nach einem der Ansprüche 1 bis 4, **dadurch gekennzeichnet, dass** die Struktur mindestens einen, vorzugsweise mehrere Sätze von miteinander verbundenen Stäben (44; 144) umfasst, wobei jeder Satz eine Verbindung bildet, wobei sich die Verbindung(en) über den größten Teil der Dicke der Schaufel (26) und/oder den größten Teil der Länge der Schaufel (26) und/oder den größten Teil der Höhe der Schaufel (26) erstreckt oder erstrecken.

6. Schaufel (26) nach Anspruch 5, **dadurch gekennzeichnet, dass** die Stäbe (44; 144), die eine Verbindung bilden, um weniger als 60° gegenüber der Hauptrichtung dieser Verbindung geneigt sind, vorzugsweise weniger als 45°, noch bevorzugter weniger als 30°.

7. Schaufel (26) nach einem der Ansprüche 1 bis 6, **dadurch gekennzeichnet, dass** die Mehrzahl der mit einem gemeinsamen Stab verbundenen Stäbe (44) um mehr als 10° gegenüber dem gemeinsamen Schaft geneigt ist, vorzugsweise um mehr als 25°, noch bevorzugter um mehr als 60°.

8. Schaufel (26) nach einem der Ansprüche 3 bis 7, **dadurch gekennzeichnet, dass** mindestens ein Stab im Allgemeinen flach ist und/oder mindestens ein Stab im Allgemeinen kugelförmig ist.

9. Schaufel (26) nach einem der Ansprüche 3 bis 8, **dadurch gekennzeichnet, dass** die Stäbe (44; 144) variable Längen und/oder variable Breiten haben.

10. Schaufel (26) nach einem der Ansprüche 1 bis 9, **dadurch gekennzeichnet, dass** die spezifische Volumendichte der Masche zwischen 1 % und 80 %, vorzugsweise zwischen 5 % und 50 %, noch bevorzugter zwischen 10 % und 20 % liegt.

11. Schaufel (26) nach einem der Ansprüche 1 bis 10, **dadurch gekennzeichnet, dass** die Volumendichte des Netzes zwischen der druckseitigen Oberfläche (46) und der saugseitigen Oberfläche (48) entlang der Höhe der Schaufel (26) und/oder von der Vorderkante (36) zur Hinterkante (38) variiert, wobei die Schaufel vorzugsweise Befestigungsmittel (30) umfasst, wobei die Volumendichte des Netzes in Richtung der Befestigungsmittel (30) zunimmt.

12. Schaufel (26) nach einem der Ansprüche 1 bis 11, **dadurch gekennzeichnet, dass** die Oberflächenrauhigkeit Ra der Stäbe (44; 144) größer als 2 µm , vorzugsweise größer als 10 µm, noch bevorzugter größer als 50 µm ist.

13. Schaufel (26) nach einem der Ansprüche 1 bis 12, **dadurch gekennzeichnet, dass** die Matrix (50) und die Verstärkung (40) aus unterschiedlichen Materialien hergestellt sind, wobei die Matrix (50) ein thermoplastisches Harz und die Verstärkung (40) Metall, vorzugsweise Titan, enthält.

14. Verfahren zur Herstellung einer Verbundstoff-Schaufel, das die folgenden Schritte umfasst:
(a) Herstellung einer Verstärkung, die ein Netz (200) umfasst, durch additive Schichtherstellung;
(b) Einlegen der Verstärkung in eine Spritzgussform (202);
(c) Einspritzen und Polymerisieren eines Harzes in der Spritzgussform, um das Netz zu füllen (204);
(d) Entnehmen der Verbundstoff-Schaufel aus der Form (206);
**dadurch gekennzeichnet, dass**
das Netz eine dreidimensionale Struktur bildet, die sich über den Großteil der Dicke der Schaufel zwischen der druckseitigen Oberfläche (46) und der saugseitigen Oberfläche (48) und/oder den Großteil der Länge der Schaufel zwischen der Vorderkante (36) und der Hinterkante (38) erstreckt;
die dreidimensionale Struktur der Bewehrung aus miteinander verbundenen Stäben (44; 144) besteht, und
die Oberfläche der Stäbe einen körnigen Charakter mit hervorstehenden Kornformen und Hohlräumen aufweist.

15. Verfahren nach Anspruch 14, **dadurch gekennzeichnet, dass** die Schaufel Anspruch 1 entspricht und die Oberflächenrauhigkeit Ra der Stäbe (44; 144) größer als 2 µm, vorzugsweise größer als 10 µm, noch bevorzugter größer als 50 µm ist.

## Claims

1. Blade (26) for a turbomachine (2), the blade (26) comprising a composite material with a matrix (50) and a reinforcement (40) comprising a unitary mesh produced by additive layer manufacturing, the blade (26) having a leading edge (36), a trailing edge (38), a pressure side surface (46) and a suction surface (48), both surfaces extending from the leading edge to the trailing edge,
**characterized in that**
the mesh forms a three-dimensional structure which extends over the majority of the thickness of the blade between the pressure side surface (46) and the suction side surface (48) and/or the majority of the length of the blade between the leading edge (36) and the trailing edge (38);
wherein the three-dimensional structure of the reinforcement comprises rods (44; 144) connected together, and
the surface of the rods show a grainy aspect, with grain shapes protruding and cavities.

2. Blade according to claim 1, **characterized in that** the mesh comprises an envelope which defines a space occupying the majority of the thickness of the blade (26) between the pressure side surface (46) and the suction side surface (48) and/or the majority of the length of the blade between the leading edge and the trailing edge, preferably the space of the envelope occupies the majority of the volume between the pressure side surface (46) and the suction side surface (48).

3. Blade (26) according to one of claims 1 to 2, **characterized in that** the rods (44, 144) are interconnected to each other with material continuity by connecting nodes (52, 152), and wherein preferably the number of rods connected to the connecting nodes varies.

4. Blade (26) according to claim 3, **characterized in that** the rods (44, 144) define with each other polyhedrons that occupy the majority of the volume between the pressure side surface (46) and the suction side surface (48), more preferably 75% of said volume, more preferably more than 95% of said volume.

5. Blade (26) according to any one of claims 1-4, **characterized in that** the structure comprises at least one, preferably several sets of rods (44, 144) connected together, each set forming a junction, the junction(s) extending over the majority of the thickness of the blade (26) and/or the majority of the length of the blade (26) and/or the majority of the height of the blade (26).

6. Blade (26) according to claim 5, **characterized in that** the rods (44, 144) forming a junction are inclined by less than 60° with respect to the main direction of said junction, preferably less than 45°, more preferably less than 30°.

7. Blade (26) according to any one of claims 1 to 6, **characterized in that** the majority of the rods (44) connected to a common rod are inclined by more than 10° relative to the common shaft, preferably more than 25°, more preferably more than 60°.

8. Blade (26) according to any one of claims 3 to 7, **characterized in that** at least one rod is generally flat, and/or at least one rod is generally spherical.

9. Blade (26) according to any one of claims 3 to 8, **characterized in that** the rods (44, 144) have variable lengths and/or variable widths.

10. Blade (26) according to any one of claims 1 to 9, **characterized in that** the specific volume density of the mesh is between 1% and 80%, preferably between 5% and 50%, more preferably between 10% and 20%.

11. Blade (26) according to one of claims 1 to 10, **characterized in that** the volume density of the mesh between the pressure side surface (46) and the suction side surface (48) varies along the height of the blade (26) and/or from the leading edge (36) to the trailing edge (38), the blade preferably comprises fastening means (30), the volume density of the mesh increasing in the direction of the fastening means (30).

12. Blade (26) according to any one of claims 1 to 11, **characterized in that** the surface roughness Ra of the rods (44; 144) is greater than 2µm, preferably greater than 10µm, more preferably greater than 50µm.

13. Blade (26) according to any one of claims 1 to 12, **characterized in that** the matrix (50) and the reinforcement (40) are made of different materials, the matrix (50) comprising a thermoplastic resin and the reinforcing (40) comprising metal, preferably titanium.

14. A method of manufacturing a composite blade comprising the steps of:
(a) producing a reinforcement comprising a mesh (200), by additive layer manufacturing;
(b) insertion of the reinforcement into an injection mold (202);
(c) injecting and polymerizing a resin in the injection mold so to fill the mesh (204);
(d) removing the composite blade from the mold (206);
**characterized in that**
the mesh forms a three-dimensional structure which extends over the majority of the thickness of the blade between the pressure side surface (46) and the suction side surface (48) and/or the majority of the length of the blade between the leading edge (36) and the trailing edge (38);
the three-dimensional structure of the reinforcement comprises rods (44, 144) connected together, and
the surface of the rods show a grainy aspect, with grain shapes protruding and cavities.

15. Method of claim 14, **characterized in that** the blade is in accordance with claim 1 and the surface roughness Ra of the rods (44, 144) is greater than 2 µm , preferably greater than 10 µm, more preferably greater than 50 µm.
